# EUROPEAN PATENT APPLICATION

(11) **EP 3 505 742 A1**
(43) Date of publication of application: **03.07.2019**
(21) Application number: 16920028.4
(22) Date of filing: 28.10.2016
(51) Int. Cl.: F02D 13/02, F01L 1/356, F02D 13/06

(54) **CONTROL DEVICE OF ENGINE WITH VARIABLE VALVE TIMING MECHANISM**

(71) Applicant: Mazda Motor Corporation, Aki-gun, Hiroshima 730-8670 (JP)
(72) Inventor: NISHIMOTO, Toshiaki, Aki-gun Hiroshima 730-8670 (JP); NISHIO, Takafumi, Aki-gun Hiroshima 730-8670 (JP); INOKI, Toshiki, Aki-gun Hiroshima 730-8670 (JP)
(74) Representative: Behr, Wolfgang
(86) International application number: PCT/JP2016/082144
(87) International publication number: WO 2018/078815

(57) **Abstract**

An engine (2) includes a VVT mechanism (33, 90) that changes an opening timing or a closing timing of at least one of an intake valve (14) or an exhaust valve (15) in accordance with an operating region of the engine, and an oil jet (28) that injects oil in a piston direction under a pressure of a first predetermined oil pressure or more. The control device of the engine (2) controls supply of an oil pressure to the VVT mechanism in such a manner that an upper limit of an oil pressure used by the VVT mechanism is set to be lower than a first predetermined oil pressure and an operating speed of the VVT mechanism is high in a direction in which an overlap amount between open periods between an intake valve and an exhaust valve increases and is low in a direction in which the overlap amount decreases.

## Description

### TECHNICAL FIELD

The present invention relates to a control device of an engine with a variable valve timing mechanism.

### BACKGROUND ART

Patent Document 1 noted below describes a configuration of an automobile engine having a hydraulic variable valve timing (VVT) mechanism in which a hydraulic height of the VVT mechanism is restricted to thereby control bidirectional operating speeds of advancement and retardation of the VVT mechanism. With this control of the operating speeds, the oil amount supplied to the VVT mechanism is reduced and a decrease in oil pressure is suppressed so that an oil pressure necessary for a reduced-cylinder operation from a four-cylinder operation to a two-cylinder operation, for example, is maintained.

### CITATION LIST

### PATENT DOCUMENT

PATENT DOCUMENT 1: Japanese Patent Application Publication No. 2015-194132

### SUMMARY OF THE INVENTION

### TECHNICAL PROBLEM

Inventors of the present application found that when a VVT mechanism is operated under a predetermined oil pressure, a relatively low operating speed of the VVT mechanism causes a valve timing to switch with a small overlap amount between open periods of an intake valve and an exhaust valve. The inventors finally found that this switching increases a pumping loss (pump loss) to reduce fuel efficiency.

It is therefore an object of the present invention to enable reduction of a pumping loss in operation of a VVT mechanism.

### SOLUTION TO THE PROBLEM

To achieve the object, the present invention provides a configuration in which the operating speed of the VVT mechanism is increased in a direction in which the overlap amount between open periods of an intake valve and an exhaust valve increases, and is reduced in a direction in which the overlap amount decreases.

Specifically, the present invention provides the following solutions for a control device of an engine with a variable valve timing mechanism.

A first aspect of the invention provides an engine control device of an engine including a variable valve timing mechanism that changes an opening timing or a closing timing of at least one of an intake valve or an exhaust valve by hydraulic driving in accordance with an operating region of the engine, and an oil jet that injects oil in a piston direction under a pressure of a first predetermined oil pressure or more, wherein an upper limit of an oil pressure used by the variable valve timing mechanism is set to be lower than the first predetermined oil pressure, and supply of an oil pressure to the variable valve timing mechanism is controlled in such a manner that an operating speed of the variable valve timing mechanism is high in a direction in which an overlap amount between open periods of the intake valve and the exhaust valve increases, and is low in a direction in which the overlap amount decreases.

With this configuration, since the oil pressure is set to be lower than the first predetermined oil pressure, oil is not injected from the oil jet. Thus, first, the oil jet under a relatively high oil pressure does not operate, and thus, supply of an oil pressure is controlled without an increase in oil pressure due to oil injection. In addition, in a transition period during an operation of the variable valve timing mechanism, the operating speed of the variable valve timing mechanism is high in a direction in which the overlap amount between open periods between the intake valve and the exhaust valve increases, and is low in a direction in which the overlap amount decreases. Thus, in either case, the overlap amount between the open periods of the intake valve and the exhaust valve is large. Consequently, a pumping loss in the transition period in the operation of the variable valve timing mechanism can be reduced, and thus, fuel efficiency can be enhanced.

In a second aspect, in engine control device of the first aspect, the engine may include a plurality of cylinders, the engine may selectively perform an all-cylinder operation in which all the plurality of cylinders operate and a reduced-cylinder operation in which one or more of the plurality of cylinders are suspended, and the reduced-cylinder operation may be performed by stopping valves of the one or more suspended cylinders under an action of a second predetermined oil pressure lower than the first predetermined oil pressure.

This configuration can obtain an oil pressure necessary for stopping the cylinder of the suspended cylinder.

In the third aspect, in the engine control device of the first or second aspect, the variable valve timing mechanism by hydraulic driving may be interposed at least in the exhaust valve, and an amount of oil supply per a unit time in a phase change in a retarding direction in the exhaust valve may be increased.

This configuration can increase the operating speed of the variable valve timing mechanism in the direction in which the overlap amount between the open periods of the intake valve and the exhaust valve.

In a fourth aspect, in the engine control device of any one of the first to third aspects, in a case where an oil temperature is lower than a predetermined oil temperature, an oil pressure may be set at a relatively high pressure in a range lower than the first predetermined oil pressure, and in a case where the oil temperature reaches the predetermined oil temperature, the oil pressure may be set at a relatively low pressure in a range greater than or equal to an oil pressure necessary for maintaining an operation of the engine.

With this configuration, since a decrease in the oil pressure due to supply oil for operating the variable valve timing mechanism is relatively large in a case where the oil temperature is low, this relatively large decrease in the oil pressure can be compensated for by setting the oil pressure at a relatively high pressure within a range lower than the first predetermined oil pressure.

In a fifth aspect, in the engine control device of any one of the first to fourth aspects, the variable valve timing mechanism by hydraulic driving may be interposed at least in the exhaust valve, and an oil consumption amount per a unit phase change amount in phase change may be smaller in a retardation side than in an advance side in such a manner that an operating speed in phase change in a retarding direction in the exhaust valve is higher than an operating speed in phase change in an advancing direction in the exhaust valve.

With this configuration, when the oil consumption amount per a unit phase change amount in phase change of the opening/closing timing of the exhaust valve is made smaller in a retardation side than in an advance side, a decrease in the operating oil pressure in the retardation side at which oil consumption amount is smaller than that in an advance side, can be reduced in the variable valve timing mechanism. Consequently, the operating speed of the VVT mechanism at the exhaust valve side at which a decrease in the operating oil pressure is high in the retardation side than in the advance side. In this case, mechanically, in the exhaust VVT mechanism, the number of retard chambers operated by charging with oil is smaller than the number of advance chambers.

### ADVANTAGES OF THE INVENTION

According to the present invention, a pumping loss in operation of a variable valve timing mechanism can be reduced.

### BRIEF DESCRIPTION OF THE DRAWINGS

FIG. 1 is a cross-sectional view schematically illustrating a partial configuration of an engine with a hydraulic variable valve timing mechanism in a control device of the engine according to one embodiment of the present invention.
FIGS. 2(a) through 2(c) are cross-sectional views illustrating a configuration and operating states of a hydraulic valve stop mechanism according to the embodiment.
FIG. 3 is a cross-sectional view illustrating an exhaust variable valve timing mechanism according to the embodiment in a direction perpendicular to a vane body in a state where the vane body (cam shaft) is held at a most advanced position by a lock mechanism.
FIG. 4 is a cross-sectional view illustrating the exhaust variable valve timing mechanism according to the embodiment in a direction perpendicular to the vane body in a state where the vane body (cam shaft) is held at a most retarded position by disengaging the lock mechanism.
A right part of FIG. 5 is a cross-sectional view taken along line V-V in FIG. 3, and a left part of FIG. 5 is a cross-sectional view illustrating an oil control valve.
FIG. 6 is a schematic drawing illustrating a configuration of an oil supply device of the engine according to the embodiment.
FIG. 7 is a schematic side view of the engine illustrating an electric intake variable valve timing mechanism and a hydraulic exhaust variable valve timing mechanism according to the embodiment.
FIG. 8 is a partial perspective view illustrating the electric intake variable valve timing mechanism and the hydraulic exhaust variable valve timing mechanism fixed to cam shafts according to the embodiment.
FIG. 9 is a cross-sectional view taken along line IX-IX in FIG. 8.
FIG. 10 is a conceptual graph showing a control method to an advancing direction of the operating speed in the exhaust variable valve timing mechanism according to the embodiment.
FIG. 11 is a conceptual graph showing a control method to a retarding direction of the operating speed in the exhaust variable valve timing mechanism according to the embodiment.
FIG. 12 is a control block diagram showing a control method of the operating speed of the exhaust variable valve timing mechanism according to the embodiment.
FIG. 13 is a graph showing a relationship between an operating speed (speed limit) and an oil temperature of the exhaust variable valve timing mechanism according to the embodiment.
FIG. 14 is a graph showing a relationship between an oil temperature and each of an operating speed (speed limit) and an oil temperature of the exhaust variable valve timing mechanism according to the embodiment.

### DESCRIPTION OF EMBODIMENTS

An embodiment of the present invention will be described in detail with reference to the drawings. The following embodiment is merely an example in nature, and is not intended to limit the invention, applications, and use of the applications.

### Embodiment

An embodiment of the present invention will be described with reference to the drawings.

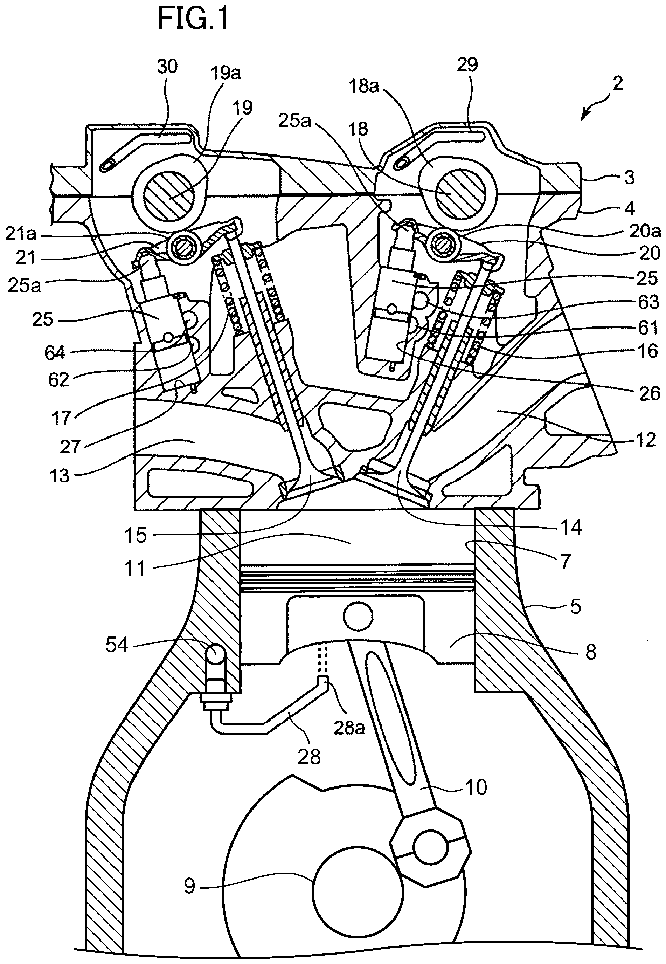

FIG. 1 illustrates an engine with a hydraulic variable valve timing (VVT) mechanism in a control device of an engine according to an embodiment of the present invention.

### Engine Configuration

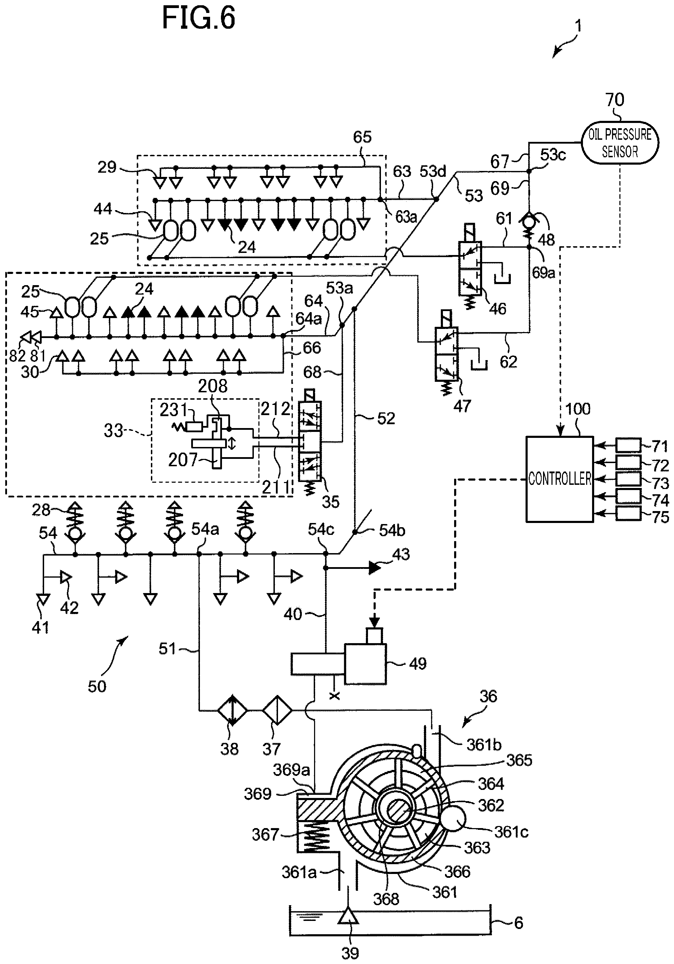

As illustrated in FIG. 1, the engine 2 is, for example, an inline four-cylinder gasoline engine in which first through fourth cylinders are arranged in series in a direction perpendicular to the drawing sheet of FIG. 1, and is mounted on a vehicle such as an automobile. In the engine 2, a head cover 3, a cylinder head 4, a cylinder block 5, a crank case (not shown), and an oil pan 6 (see FIG. 6) are coupled vertically. A piston 8 slidable in each of four cylinder bores 7 formed in the cylinder block 5 is coupled to a crank shaft 9 rotatably supported on the crank case by a connecting rod 10. The cylinder bore 7 in the cylinder block 5, the piston 8, and the cylinder head 4 form a combustion chamber 11 for each cylinder.

The cylinder head 4 has an intake port 12 and an exhaust port 13 each communicating with the combustion chamber 11. The intake port 12 and the exhaust port 13 are provided with an intake valve 14 and an exhaust valve 15 that open and close the intake port 12 and the exhaust port 13, respectively. The intake valve 14 and the exhaust valve 15 are biased in a closing direction (upward in FIG. 1) by return springs 16 and 17, respectively. Cam followers 20a and 21a rotatably disposed on substantially center portions of swing arms 20 and 21 are pushed downward by cam portions 18a and 19a respectively disposed on the outer peripheries of rotating cam shafts 18 and 19. The swing arms 20 and 21 swing about vertexes of pivot mechanisms 25a each disposed at one end of the swing arm 20 or 21 so that the intake valve 14 and the exhaust valve 15 are pushed downward and opened against biasing forces of the return springs 16 and 17 at the other end of each of the swing arms 20 and 21.

A known hydraulic lash adjuster 24 (hereinafter referred to as an HLA 24) that automatically adjusts a valve clearance to zero by an oil pressure is provided as pivot mechanisms (having a configuration similar to that of a pivot mechanism 25a of an HLA 25 described later) in the swing arms 20 and 21 of the second cylinder and the third cylinder located at a center portion in the cylinder line of the engine 2. The HLA 24 is shown only in FIG. 6.

On the other hand, the HLA 25 equipped with a valve stop mechanism (hereinafter referred to as a valve stop mechanism-equipped HLA 25) including the pivot mechanism 25a is provided on each of the swing arms 20 and 21 of the first cylinder and the fourth cylinder at the ends of the cylinder line of the engine 2. The valve stop mechanism-equipped HLA 25 is configured to automatically adjust a valve clearance to zero in a manner similar to the HLA 24 described above. In addition, the valve stop mechanism-equipped HLA 25 stops operations (i.e., stops open and close operations) of the intake and exhaust valves 14 and 15 of the first cylinder and the fourth cylinder in a reduced-cylinder operation in which operations of the first cylinder and the fourth cylinder as a part of all the cylinders of the engine 2 are suspended, and operates (i.e., performs open and close operations of) the intake and exhaust valves 14 and 15 of the first cylinder and the fourth cylinder in an all-cylinder operation in which all the cylinders (four cylinders) are operated. The intake and exhaust valves 14 and 15 of the second cylinder and the third cylinder operate in both the reduced-cylinder operation and the all-cylinder operation. Thus, in the reduced-cylinder operation, operations of the intake and exhaust valves 14 and 15 of only the first cylinder and the fourth cylinder in all the cylinders of the engine 2 are stopped in the reduced-cylinder operation, whereas the intake and exhaust valves 14 and 15 of all the cylinders are operated in the all-cylinder operation. The reduced-cylinder operation and the all-cylinder operation are switched to each other in accordance with the operating state of the engine 2, which will be described later.

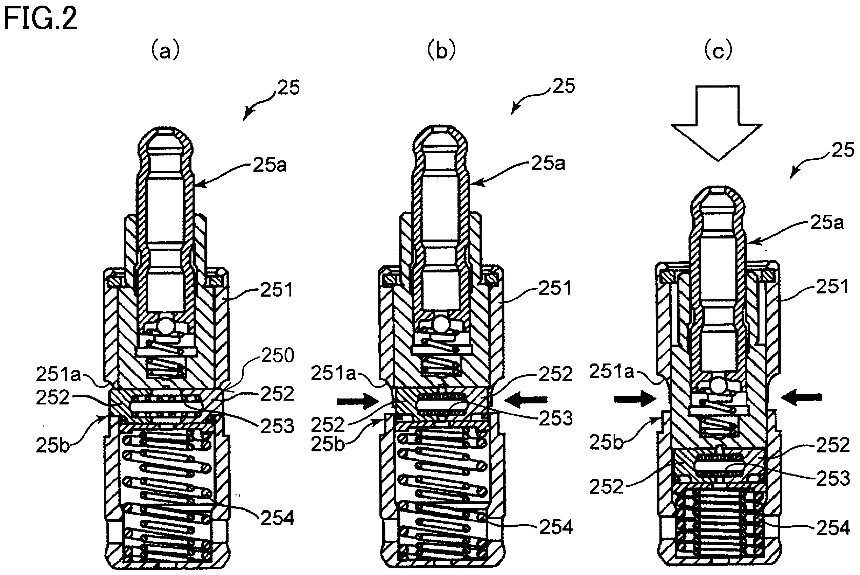

Intake- and exhaust-side portions of the cylinder head 4 corresponding to the first and fourth cylinders respectively have attachment holes 26 and 27 for inserting and attaching lower end portions of the valve stop mechanism-equipped HLAs 25. Intake- and exhaust-side portions of the cylinder head 4 corresponding to the second and third cylinders respectively have attachment holes similar to the attachment holes 26 and 27 for inserting and attaching lower end portions of the HLAs 24. In addition, two oil passages 61 and 63 and two oil passages 62 and 64 are formed to pierce the cylinder head 4 and respectively communicate with the attachment holes 26 and 27 for the valve stop mechanism-equipped HLAs 25. The oil passages 61 and 62 are configured to supply oil pressures (operating pressures) for operating valve stop mechanisms 25b (see FIGS. 2(a) through 2(c)) in the valve stop mechanism-equipped HLAs 25 in a state where the valve stop mechanism-equipped HLAs 25 are fitted in the attachment holes 26 and 27. On the other hand, the oil passages 63 and 64 are configured to supply oil pressures for enabling the pivot mechanisms 25a of the valve stop mechanism-equipped HLAs 25 to automatically adjust valve clearances to zero. Only the oil passages 63 and 64 communicate with the attachment holes for the HLAs 24. The oil passages 61 through 64 will be described in detail later with reference to FIG. 6.

The cylinder block 5 includes a main gallery 54 extending along the cylinder line in a side wall at an exhaust side of the cylinder bores 7. Near a lower side of the main gallery 54, each piston 8 is provided with an oil jet 28 (oil injection valve) that is used for cooling the piston and communicates with the main gallery 54. The oil jet 28 has a nozzle portion 28a disposed under the piston 8. The oil jet 28 is configured to inject engine oil (hereinafter referred to simply as oil) toward the back side of a vertex portion of the piston 8 from the nozzle portion 28a.

Oil showers 29 and 30 constituted by pipes are disposed above the cam shafts 18 and 19, respectively. In this configuration, lubricating oil is dropped from the oil showers 29 and 30 onto the underlying cam portions 18a and 19a of the cam shafts 18 and 19 and further underlying contact portions between the swing arms 20 and 21 and the cam followers 20a and 21a.

Here, with reference to FIG. 2, the valve stop mechanism 25b, which is a hydraulic operating device, will be described. The valve stop mechanism 25b stops an operation of at least one of the intake and exhaust valves 14 and 15 (both of the valves in this embodiment) of the first cylinder and the fourth cylinder that are a part of all the cylinders of the engine 2, by a hydraulic operation in accordance with the operating state of the engine 2. Accordingly, in switching to the reduced-cylinder operation in accordance with the operating state of the engine 2, the valve stop mechanisms 25b stop opening and closing operations of the intake and exhaust valves 14 and 15 of the first cylinder and the fourth cylinder. In switching to the all-cylinder operation, stopping of operations of the valves by the valve stop mechanisms 25b is canceled, and opening and closing operations of the intake and exhaust valves 14 and 15 of the first cylinder and the fourth cylinder are performed.

The valve stop mechanism 25b described above is disposed in the valve stop mechanism-equipped HLA 25. That is, the valve stop mechanism-equipped HLA 25 includes the pivot mechanism 25a and the valve stop mechanism 25b. The pivot mechanism 25a has substantially the same configuration as that of a known pivot mechanism of the HLA 24 that automatically adjusts a valve clearance to zero by an oil pressure.

As illustrated in FIG. 2(a), the valve stop mechanism 25b includes a lock mechanism 250 that locks an operation of the pivot mechanism 25a. The lock mechanism 250 includes a pair of lock pins 252 (lock members) capable of being inserted and extracted into/from two through holes 251a that are radially opposed to each other in a side peripheral surface of a bottomed outer cylinder 251 that houses the pivot mechanism 25a such that the pivot mechanism 25a is axially slidable. The pair of lock pins 252 is biased radially outward by a spring 253. A lost motion spring 254 that presses and biases the pivot mechanism 25a upward from the outer cylinder 251 is disposed between the inner bottom of the outer cylinder 251 and the bottom of the pivot mechanism 25a.

In a case where the lock pins 252 are fitted in the through holes 251a of the outer cylinder 251, the pivot mechanism 25a located above the lock pins 252 is fixed while projecting upward. In this case, the vertex portion of the pivot mechanism 25a serves as a fulcrum of swing of each of the swing arms 20 and 21, and thus, when the cam portions 18a and 19a push the cam followers 20a and 21a downward with rotation of the cam shafts 18 and 19, the intake and exhaust valves 14 and 15 are pushed downward against biasing forces of the return springs 16 and 17 to be opened. In this manner, the lock pins 252 cause the valve stop mechanism 25b to be fitted in the through holes 251a in the first cylinder and the fourth cylinder so that the engine 2 can thereby perform an all-cylinder operation.

On the other hand, as illustrated in FIGS. 2(b) and 2(c), when the outer end surfaces of the lock pins 252 are pushed by an operating oil pressure, the lock pins 252 move rearward toward the radially inside of the outer cylinder 251 against a biasing force of the spring 253 such that the lock pins 252 approach each other. Consequently, the lock pins 252 are released from the through holes 251a of the outer cylinder 251, and thus, the pivot mechanism 25a located above the lock pins 252 moves downward to be axially under the outer cylinder 251 together with the lock pins 252 so that the valves come to be in a valve stop state.

That is, the return springs 16 and 17 that bias the intake and exhaust valves 14 and 15 upward are configured to generate biasing forces greater than that of the lost motion spring 254 that biases the pivot mechanism 25a upward. Accordingly, when the cam portions 18a and 19a respectively push the cam followers 20a and 21a downward with rotation of the cam shafts 18 and 19, the vertex portions of the intake and exhaust valves 14 and 15 serve as fulcrums of swing of the swing arms 20 and 21. Consequently, with the intake and exhaust valves 14 and 15 closed, the pivot mechanisms 25a are pushed downward against biasing forces of the lost motion springs 254. As a result, the lock pins 252 are released from the through holes 251a by an operating oil pressure so that a reduced-cylinder operation can be performed.

### Hydraulic Exhaust VVT Mechanism

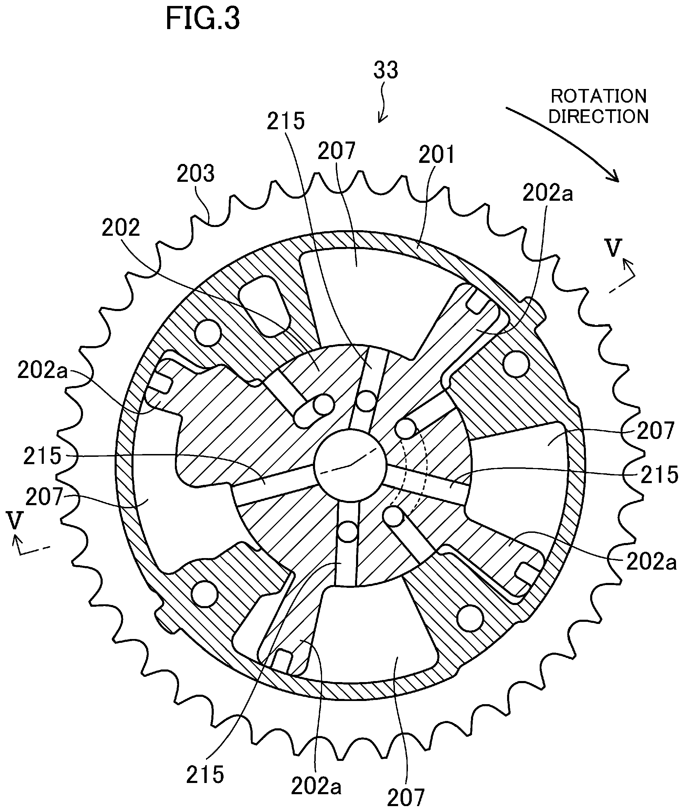

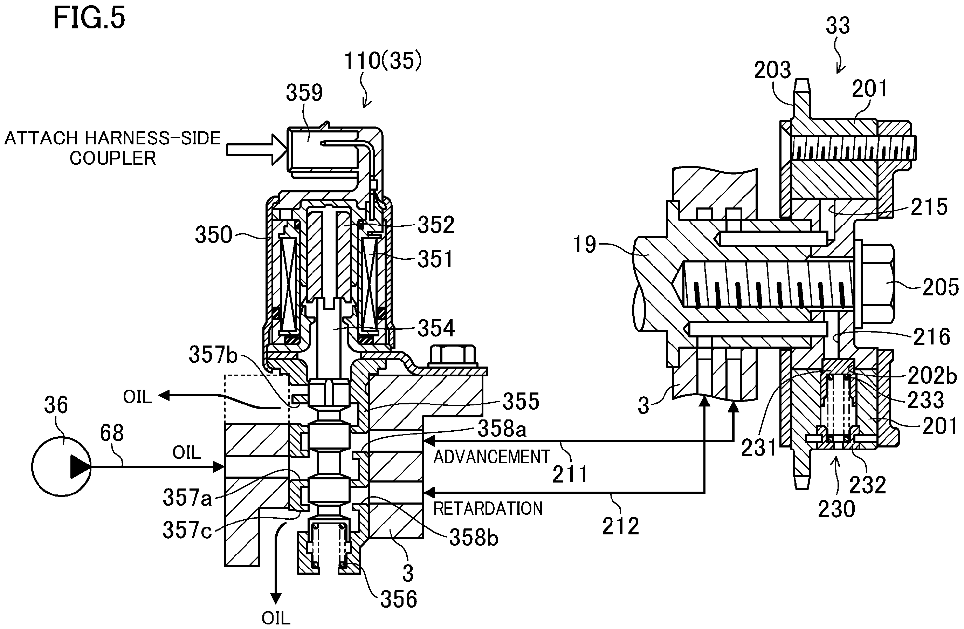

FIGS. 3 through 5 illustrate an exhaust variable valve timing (VVT) mechanism 33 (hereinafter referred to simply as a VVT 33) that is a hydraulic operating device. FIG. 5 also illustrates an oil control valve 110 that controls an operation of the VVT 33 by an oil pressure.

As illustrated in FIGS. 3 through 5, the VVT 33 includes a substantially annular housing 201 and a vane body 202 housed in the housing 201. The housing 201 is coupled to be rotatable together with a cam pulley 203 that rotates in synchronization with the crank shaft 9, and rotates in cooperation with the crank shaft 9. The vane body 202 is coupled, by a fastening bolt 205, to a cam shaft 19 that opens and closes the exhaust valve 15 such that the vane body 202 is rotatable together with the cam shaft 19.

In the housing 201, a plurality of advance chambers 207 and a plurality of retard chambers 208 are defined by the inner peripheral surface of the housing 201 and a plurality of vanes 202a disposed on the outer peripheral surface of the vane body 202. As illustrated in FIGS. 5 and 6, the advance chambers 207 and the retard chambers 208 are connected to an exhaust-side first direction switching valve 35 serving as a known oil control valve 110 through an advance-side oil passage 211 and a retard-side oil passage 212, respectively. The exhaust-side first direction switching valve 35 is connected to a variable displacement oil pump 36. In the cam shaft 19 and the vane body 202, advance-side oil passages 215 and retard-side oil passages 216 constituting parts of the advance-side oil passage 211 and the retard-side oil passage 212 are formed.

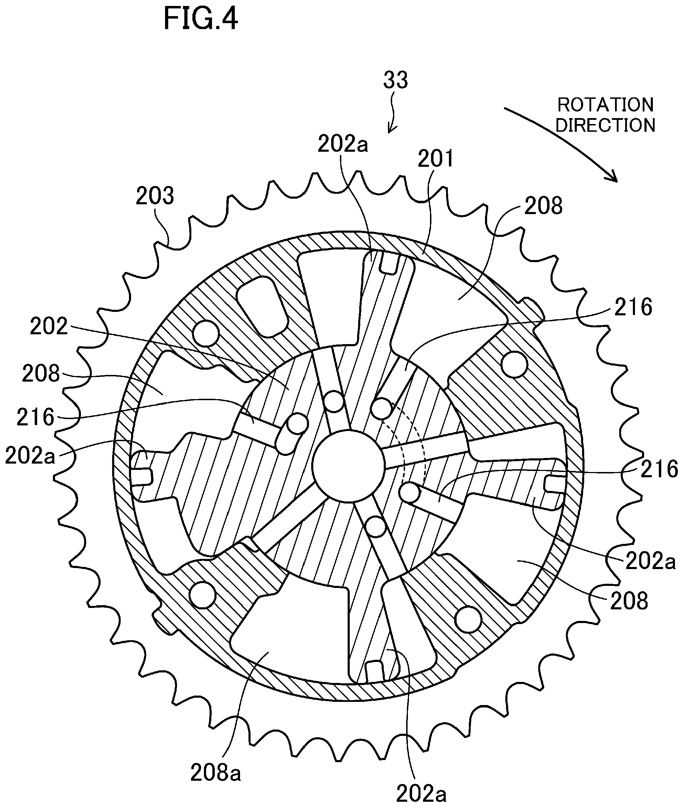

Here, FIG. 3 illustrates a case where the vanes 202a are retained at a most advanced position with respect to the cam pulley 203, that is, the crank shaft 9, by oil supplied through the advance-side oil passages 215, whereas FIG. 4 illustrates a case where the vanes 202a are retained at a most retarded position with respect to the cam pulley 203 by oil supplied through the retard-side oil passages 216.

The advance-side oil passages 215 extend radially from a vicinity of the center of the vane body 202 and are connected to the advance chambers 207. The retard-side oil passages 216 extend radially from a vicinity of the center of the vane body 202 and are connected to the retard chambers 208. One of the plurality of advance-side oil passages 215 radially extending from the vicinity of the center of the vane body 202 is formed on a portion of the outer peripheral surface of the vane body 202 where no vanes 202a are formed, and is connected to the bottom surface of a fitting recess 202b in which a lock pin 231 described later is fitted (see FIG. 5). This advance-side oil passage 215 is connected to one of the plurality of advance chambers 207 through the fitting recess 202b. One retard chamber 208a in the retard chambers 208 illustrated in FIG. 4 does not communicate with any of the retard-side oil passages 216 and does not supply oil, and thus, an operation torque to the vanes 202a does not occur. Accordingly, since the number of retard chambers 208 is smaller than that of the advance chambers 207, the amount of oil necessary for operation is also small.

As illustrated in FIG. 5, the VVT 33 includes a lock mechanism 230 for locking an operation of the VVT 33. The lock mechanism 230 includes the lock pin 231 for fixing a phase angle of the cam shaft 19 with respect to the crank shaft 9 at a specific phase angle. In this embodiment, the specific phase angle is a most advanced phase angle. The specific phase angle is not limited to the most advanced phase angle, and may be any phase angle.

The lock pin 231 is slidable in the radial direction of the housing 201. A spring holder 232 is fixed to a portion of the housing 201 radially outside the lock pin 231. A lock pin biasing spring 233 that biases the lock pin 231 radially inward of the housing 201 is disposed between the spring holder 232 and the lock pin 231. While the fitting recess 202b is at a position facing the lock pin 231, the lock pin biasing spring 233 causes the lock pin 231 to be fitted in the fitting recess 202b, that is, to be in a locked state. Accordingly, the vane body 202 is fixed to the housing 201, and the phase angle of the cam shaft 19 with respect to the crank shaft 9 is fixed.

With the configuration described above, by controlling the exhaust-side first direction switching valve 35, an oil supply amount of the VVT 33 to the advance chambers 207 and the retard chambers 208 can be controlled. Specifically, when oil is supplied to the advance chambers 207 in a larger amount (under a higher oil pressure) than to the retard chambers 208 by controlling the exhaust-side first direction switching valve 35, the cam shaft 19 pivots in its rotation direction (direction indicated by arrows in FIGS. 3 and 4), and the opening timing of the exhaust valve 15 is advanced (see FIG. 3), and the lock pin 231 is fitted in the fitting recess 202b at a most advanced position of the cam shaft 19.

On the other hand, when oil is supplied to the retard chambers 208 in a larger amount (under a higher oil pressure) than to the advance chambers 207 by controlling the exhaust-side first direction switching valve 35, the cam shaft 19 pivots in a direction opposite to its rotation direction, and the opening timing of the exhaust valve 15 is delayed (see FIG. 4). In retarding from the most advanced position of the cam shaft 19, the lock pin 231 is pushed radially outward of the housing 201 by an oil pressure against the lock pin biasing spring 233, thereby unlocking the lock pin 231. At this time, the retard chambers 208 except retard chambers 208 communicating with the fitting recess 202b are already filled with oil. Thus, the exhaust-side first direction switching valve 35 causes the cam shaft 19 to pivot in the direction opposite to its rotation direction immediately after unlocking so that the opening timing of the exhaust valve 15 can be delayed (retardation).

To unlock the lock pin 231 of the VVT 33, it is necessary to supply an oil pressure exceeding a biasing force of the lock pin biasing spring 233 to the retard chambers 208. This oil pressure can be obtained by controlling the exhaust-side first direction switching valve 35. While this oil pressure is being supplied to the retard chambers 208, an oil pressure (basically an oil pressure close to zero) lower than the oil pressure that is being supplied to the retard chambers 208 is supplied to the advance chambers 207 so that the cam shaft 19 pivots in the direction opposite to its rotation direction immediately after unlocking of the lock pin 231, and is released from the locked position. Subsequently, the exhaust-side first direction switching valve 35 is controlled to thereby control an opening phase of the exhaust valve 15.

At least one assist spring (compression coil spring) (not shown) is disposed between each vane 202a in the VVT 33 and a portion of the housing 201 opposite to the vane 202a in the direction opposite to the rotation direction of the cam shaft 19 (i.e., the advance chambers 207). The assist spring biases the vane body 202 to an advance side, and assists movement of the vane body 202 to the advance side. This is because the cam shaft 19 is subjected to loads of a fuel pump 81 and a vacuum pump 82 (see FIG. 6) described later, and for the purpose of ensuring movement of the vane body 202 to the most advanced position over the loads (ensuring fitting of the lock pin 231 in the fitting recess 202b).

The left part of FIG. 5 illustrates an example of a configuration of the exhaust-side first direction switching valve 35 constituted by the oil control valve 110. As illustrated in this left part, the exhaust-side first direction switching valve 35 includes a coil 351 held in a casing 350, a plunger 352 slidably supported on the inside of the coil 351, a spool valve 354 held on one end of the plunger 352, a sleeve 355 slidably supporting the spool valve 354 on the inside of the sleeve 355, and a connector 359 projecting from the connector 359.

The sleeve 355 is held by a cam cap (not shown), and an end of the sleeve 355 toward the plunger 352 is held by the casing 350. A biasing spring 356 that exerts a biasing force toward the coil 351 on the spool valve 354 is disposed between an end of the spool valve 354 opposite to the plunger 352 and a bottom portion of the sleeve 355.

A side surface of the sleeve 355 has a supply port 357a for oil supplied through the oil passage 68 connected to the oil pump 36 and an opening formed in the cam cap. The side surface of the sleeve 355 having the supply port 357a also has oil discharge ports (drains) 357b and 357c.

Another side surface of the plunger 352 has distribution ports 358a and 358b for oil to be distributed through the advance-side oil passage 211, the retard-side oil passage 212, and openings formed in the cam cap in correspondence with the oil passages 211 and 212.

When an OCV driving duty signal is input to the connector 359, the spool valve 354 is moved to a predetermined position by the plunger 352 in accordance with a duty ratio of the signal. Accordingly, the amount of oil flowing into the advance chambers 207 or the retard chambers 208 in the VVT 33 is determined.

### Oil Supply Device

Next, with reference to FIG. 6, the oil supply device 1 for supplying oil to the engine 2 will be described in detail.

As illustrated in FIG. 6, the oil supply device 1 includes the variable displacement oil pump 36 (hereinafter referred to as the oil pump 36) that is driven by rotation of the crank shaft 9, and an oil supply passage 50 (oil pressure path) connected to the oil pump 36 and guiding oil whose pressure has been increased by the oil pump 36 to a lubrication part of the engine 2 and the hydraulic operating device. The oil pump 36 is an auxiliary machine that is driven by the engine 2.

The oil supply passage 50 is an oil passage pierced in the pipes, the cylinder head 4, and the cylinder block 5, for example. The oil supply passage 50 is constituted by a first communication path 51, a main gallery 54, a second communication path 52, a third communication path 53, and a plurality of oil passages 61 through 69.

The first communication path 51 communicates with the oil pump 36, and extends from the oil pump 36, more specifically, from an outlet 361b described later, to a branch point 54a in the cylinder block 5. The main gallery 54 extends along the cylinder line in the cylinder block 5. The second communication path 52 extends from a branch point 54b on the main gallery 54 to the cylinder head 4. The third communication path 53 extends substantially horizontally between an intake side and an exhaust side in the cylinder head 4. The plurality of oil passages 61 through 69 are branched from the third communication path 53 in the cylinder head 4.

The oil pump 36 is a known variable displacement oil pump that changes the volume of the oil pump 36 to make an oil discharge amount of the oil pump 36 variable, and includes a housing 361, a driving shaft 362, a pump element, a cam ring 366, a spring 367, and ring members 368.

The housing 361 is constituted by a pump body having an opening at one end and including a pump accommodating chamber including a hollow space that is circular in cross section, and a cover member covering the opening at the end of the pump body. The driving shaft 362 is rotatably supported by the housing 361, penetrates substantially a center portion of the pump accommodating chamber, and is driven to rotate by the crank shaft 9. The pump element is constituted by a rotor 363 rotatably housed in the pump accommodating chamber and coupled to the driving shaft 362 at a center portion thereof, and vanes 364 individually retreatably housed in a plurality of slits formed by radially cutting out an outer peripheral portion of the rotor 363. The cam ring 366 is eccentrically disposed with respect to a rotation center of the rotor 363 at the outer periphery of the pump element, and defines pump chambers 365 as a plurality of hydraulic oil chambers together with the rotor 363 and its adjacent vanes 364. The spring 367 is a biasing member that is housed in the pump body and constantly biases the cam ring 366 in a direction in which an eccentricity of the cam ring 366 with respect to the rotation center of the rotor 363 increases. The ring members 368 are a pair of ring-shaped members slidably disposed at each inner peripheral side of the rotor 363 and each having a smaller diameter than the rotor 363.

The housing 361 includes an inlet 361a through which oil is supplied to inner pump chambers 365 and the outlet 361b through which oil is discharged from the pump chambers 365. In the housing 361, a pressure chamber 369 is defined by the inner peripheral surface of the housing 361 and the outer peripheral surface of the cam ring 366, and the pressure chamber 369 has an introduction hole 369a.

As described above, the oil pump 36 is configured such that introduction of oil into the pressure chamber 369 through the introduction hole 369a causes the cam ring 366 to swing with respect to a fulcrum 361c and causes the rotor 363 to be eccentric with respect to the cam ring 366 so that the discharge capacity of the oil pump 36 changes.

An oil strainer 39 facing the oil pan 6 is connected to the inlet 361a of the oil pump 36. In the first communication path 51 communicating with the outlet 361b of the oil pump 36, an oil filter 37 and an oil cooler 38 are disposed in this order from an upstream side to a downstream side. Oil stored in the oil pan 6 is pumped by the oil pump 36 through the oil strainer 39, then filtered by the oil filter 37 and cooled by the oil cooler 38, and then introduced to the main gallery 54 in the cylinder block 5.

The main gallery 54 is connected to the oil jet 28 for injecting cooling oil to the back surfaces of the four pistons 8 described above, oil supply portions 41 of metal bearings disposed in five main journals rotatably supporting the crank shaft 9, and oil supply portions 42 of metal bearings disposed on crank pins of the crank shaft 9 rotatably coupling four connecting rods. Oil is constantly supplied to the main gallery 54.

An oil supply portion 43 for supplying oil to a hydraulic chain tensioner and an oil passage 40 for supplying oil from the introduction hole 369a into the pressure chamber 369 of the oil pump 36 through a linear solenoid valve 49 are connected to a downstream side of a branch point 54c on the main gallery 54.

The oil passage 68 branching from a branch point 53a of the third communication path 53 is connected to the exhaust-side first direction switching valve 35. The exhaust-side first direction switching valve 35 is controlled so that oil is supplied to the advance chambers 207 and the retard chambers 208 of the exhaust VVT 33 through the advance-side oil passage 211 and the retard-side oil passage 212, respectively. An oil passage 64 branching from the branch point 53a is connected to oil supply portions 45 (represented by white triangles in FIG. 6) and the HLAs 24 (represented by black triangles in FIG. 6), the valve stop mechanism-equipped HLAs 25 (white ovals in FIG. 6), the fuel pump 81, and the vacuum pump 82. The oil supply portions 45 supply oil to a cam journal of the exhaust-side cam shaft 19. The fuel pump 81 is driven by the cam shaft 19, and supplies high-pressure fuel to a fuel injection valve that supplies fuel to the combustion chamber 11. The vacuum pump 82 is driven by the cam shaft 19 and obtains a pressure of a brake master cylinder. The oil passage 64 is constantly supplied with oil. In addition, an oil passage 66 branching from a branch point 64a of the oil passage 64 is connected to an oil shower 30 that supplies lubricating oil to an exhaust-side swing arm 21. The oil passage 66 is also constantly supplied with oil.

An oil passage 67 branching from a branch point 53c of the third communication path 53 is provided with an oil pressure sensor 70 that detects an oil pressure of the oil passage 67. The oil passage 63 branching from a branch point 53d is connected to oil supply portions 44 (represented by white triangles in FIG. 6) of a cam journal of the intake-side cam shaft 18, the HLAs 24 (represented by black triangles in FIG. 6), and the valve stop mechanism-equipped HLAs 25 (represented by white ovals in FIG. 6). In addition, an oil passage 65 branching from a branch point 63a of the oil passage 63 is connected to the oil shower 29 that supplies lubricating oil to the intake-side swing arm 20.

The oil passage 69 branching from a branch point 53c of the third communication path 53 is provided with a check valve 48 that restricts an oil flow direction to one direction from an upstream side to a downstream side. At a branch point 69a downstream of the check valve 48, the oil passage 69 branches to the two oil passages 61 and 62 communicating with the attachment holes 26 and 27 for the valve stop mechanism-equipped HLAs 25. The oil passages 61 and 62 are connected to the valve stop mechanisms 25b of the intake- and exhaust-side valve stop mechanism-equipped HLAs 25 through an intake-side second direction switching valve 46 and an exhaust-side second direction switching valve 47 serving as the second oil control valves. The intake-side second direction switching valve 46 and the exhaust-side second direction switching valve 47 are controlled so that oil is supplied to the valve stop mechanisms 25b.

After lubrication and cooling, lubricating oil and cooling oil supplied to the metal bearing rotatably supporting the crank shaft 9, the pistons 8, and the cam shafts 18 and 19, for example, are dropped in the oil pan 6 through an unillustrated drain oil passage and is circulated by the oil pump 36.

An operation of the engine 2 is controlled by a controller 100. The controller 100 receives detection information from sensors that detect an operating state of the engine 2. The controller 100 detects a rotation angle of the crank shaft 9 by a crank angle sensor 71 and determines an engine speed based on the detection signal, for example. An action position sensor 72 detects a pressing amount (accelerator opening angle) of an accelerator pedal by a passenger of the vehicle on which the engine 2 is mounted. Based on the pressing amount, a required torque is calculated. In addition, the oil pressure sensor 70 detects a pressure of the oil passage 67. An oil temperature sensor 73 disposed substantially at the same position as the oil pressure sensor 70 detects an oil temperature in the oil passage 67. The oil pressure sensor 70 and the oil temperature sensor 73 may be disposed on the oil supply passage 40. A cam angle sensor 74 disposed near the cam shafts 18 and 19 detects rotation phases of the cam shafts 18 and 19, and based on the detected cam angles, detects phase angles of the VVTs 33 and 90. A water temperature sensor 75 detects a temperature of cooling water for cooling the engine 2 (hereinafter referred to as a water temperature).

The controller 100 is a control device based on a known microcomputer, and includes at least a signal receiving section that receives detection signals from sensors (e.g., the oil pressure sensor 70, the crank angle sensor 71, a throttle position sensor 72, the oil temperature sensor 73, the cam angle sensor 74, and the water temperature sensor 75), a computation section that performs a computation process for control, a signal output section that outputs control signals to devices to be controlled (e.g., the exhaust-side first direction switching valve 35, the intake- and exhaust-side second direction switching valves 46 and 47, and the linear solenoid valve 49), and a storage section that stores programs and data necessary for control (e.g., an oil pressure control map and a duty ratio map).

The linear solenoid valve 49 is a flow rate (discharge rate) control valve for controlling the discharge rate of the oil pump 36 in accordance with the operating state of the engine 2. In this configuration, oil is supplied to the pressure chamber 369 of the oil pump 36 while the linear solenoid valve 49 is open. The configuration of the linear solenoid valve 49 itself is already known, and thus, will be described here.

The controller 100 transmits, to the linear solenoid valve 49, a control signal of a duty ratio in accordance with the operating state of the engine 2, and controls a pressure of oil to be supplied to the pressure chamber 369 of the oil pump 36 through the linear solenoid valve 49. Based on the oil pressure of the pressure chamber 369, an eccentricity of the cam ring 366 is controlled so that the amount of change of the internal volume of the pump chambers 365 is controlled to thereby control the flow rate (discharge rate) of the oil pump 36. That is, the volume of the oil pump 36 is controlled by using the duty ratio.

### Electric Intake VVT Mechanism

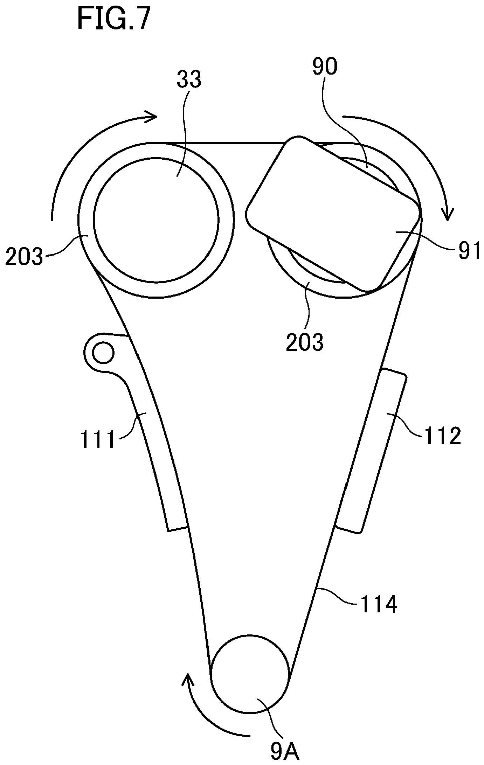

FIG. 7 schematically illustrates operations of the hydraulic exhaust variable valve timing (VVT) mechanism 33 and the electric intake variable valve timing (VVT) mechanism 90. As illustrated in FIG. 7, the cam pulleys 203 of the VVT 33 and the VVT 90 are driven by a crank shaft pulley (sprocket) 9A through a timing chain 114. A hydraulic chain tensioner 111 is disposed between the crank shaft pulley 9A and the cam pulley 203 of the VVT 33. A chain guide 112 is disposed between the cam pulley 203 of the VVT 90 and the crank shaft pulley 9A. An electric motor 91 that shifts a phase of a cam shaft (not shown) of the VVT 90 is attached to an end of the cam shaft, as will be described later.

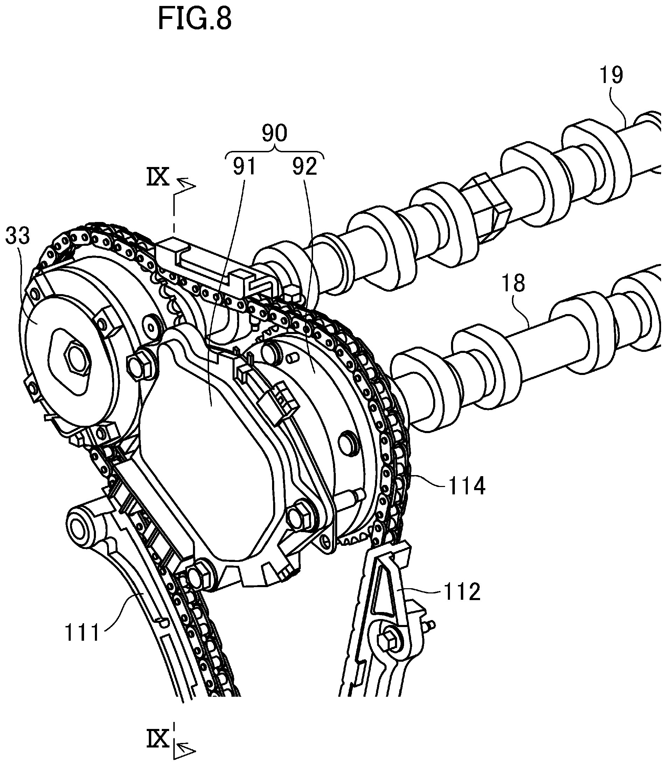

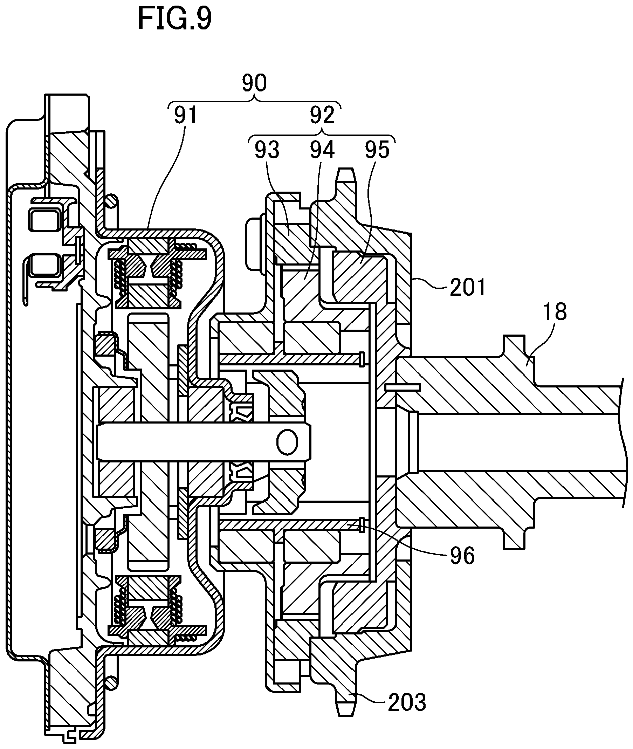

FIG. 8 is a perspective view including the cam shafts of the hydraulic VVT 33 and the electric VVT 90. FIG. 9 is a cross-sectional configuration taken along line IX-IX in FIG. 8.

As illustrated in FIGS. 8 and 9, the electric VVT 90 is constituted by the electric motor 91 and a conversion section 92 that causes a phase shift in the cam shaft 18.

As illustrated in FIG. 9, the conversion section 92 includes a gear pulley (sprocket) 93, a gear planetary 94, and a gear cam shaft 95. The gear pulley 93 is screwed to a peripheral portion of the cam pulley 203, has, for example, 34 internal teeth, and transfers, to the gear planetary 94, a rotary force (torque) transferred from the timing chain 114 to the cam pulley 203. The gear planetary 94 has, for example, 33 large external teeth and 27 small external teeth that mesh with the internal teeth of the gear pulley 93. The gear cam shaft 95 has, for example, 28 internal teeth that mesh with the small external teeth of the gear planetary 94, and is secured on an end portion of the cam shaft 19. Here, a speed-reducing rate by the conversion section 92 of the electric motor 91 is 154.

### Control of VVT Operating Speed

Inventors of the present application confirmed that the valve timing switches with a small overlap amount between open periods of the intake valve and the exhaust valve in shifting from a heavy-load operation to a low-load operation and from a low-load operation to a heavy-load operation, for example. This state of a small overlap amount causes degradation of fuel efficiency due to a pumping loss.

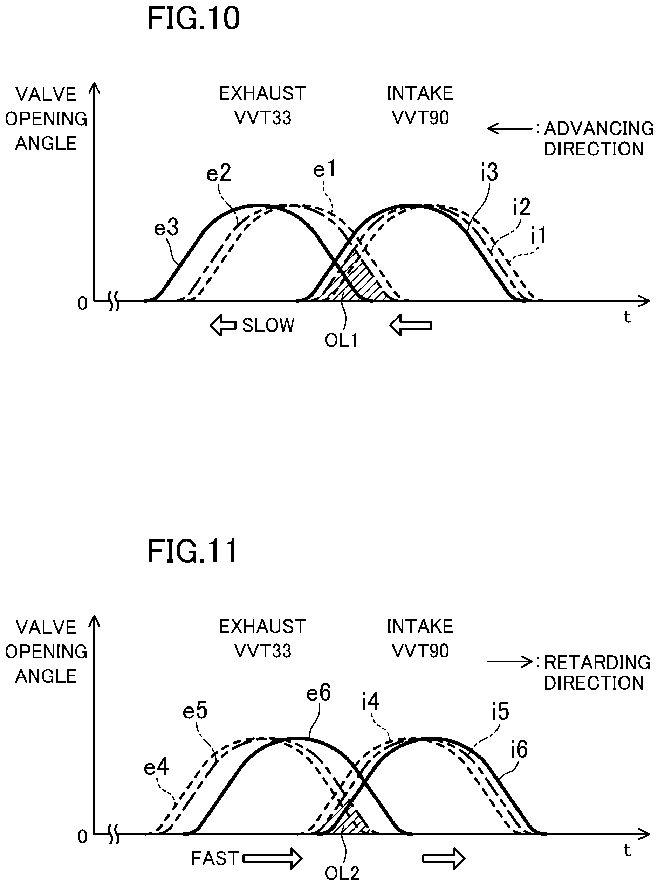

FIGS. 10 and 11 show an outline of a method for controlling a VVT operating speed according to the embodiment of the present invention. FIG. 10 shows valve timings in advancing the phase angles of the cam shafts 18 and 19 by the exhaust VVT 33 and the intake VVT 90. FIG. 11 shows valve timings in retarding the phase angles of the cam shafts 18 and 19 by the intake VVT 33 and the intake VVT 90.

FIG. 10 shows a situation where the phases of the cam shafts 18 and 19 are advanced in shifting a load of the engine 2 from a heavy load to a low load. Here, suppose the engine speed is 2000 rpm and an air charging efficiency decreases from 0.375 to 0.125. The phase shifts of the VVTs 33 and 90 in the advancing direction contribute to, for example, an increase in an effective compression ratio by early closing of the intake valve 14 and enhancement of combustion stability by reducing the overlap amount due to early closing of the exhaust valve 15.

FIG. 11 shows a situation where the phases of the cam shafts 18 and 19 are retarded in shifting of a load of the engine 2 from a low load to a heavy load. Here, suppose the engine speed is 2000 rpm and an air charging efficiency increases from 0.125 to 0.375. The phase shifts of the VVTs 33 and 90 in the retarding direction contribute to, for example, reduction of a pumping loss by slow closing of the intake valve 14 and an increase in the overlap amount between open periods of the valves 14 and 15 and an increase in expansion ratio by slow opening of the exhaust valve 15.

In this embodiment, as illustrated in FIG. 10, in advancing the VVTs 33 and 90, the operating speed (shift speed) of the exhaust VVT 33 is set lower than the operating speed (shift speed) of the intake VVT 90. In FIG. 10, a shift speed from a graph e1 in shift start to a graph e3 in shift end in a shift operation of the exhaust valve 15 is lower than a shift speed from a graph i1 in shift start to graph i3 in shift end in a shift operation of the intake valve 14. In this embodiment, an electric mechanism is used as the intake VVT 90 as described above. Thus, it is generally easy to make the shift speed of the electric VVT 90 higher than that of the hydraulic VVT 33.

Accordingly, since the shift speed of the exhaust valve 15 is lower than the shift speed of the intake valve 14, it is possible to suppress a decrease in an overlap amount OL1 between a graph e2 during shift of the exhaust valve 15 and a graph i2 during shift of the intake valve 14, for example.

On the other hand, in this embodiment, as shown in FIG. 11, the operating speed (shift speed) of the exhaust VVT 33 is set higher than the operating speed (shift speed) of the intake VVT 90 in retarding the VVTs 33 and 90. In FIG. 11, a shift speed from a graph e4 in shift start to a graph e6 in shift end in the shift operation of the exhaust valve 15 is higher than a shift speed from a graph i4 in shift start to a graph i6 in shift end in the shift operation of the intake valve 14.

Accordingly, since the shift speed of the exhaust valve 15 is higher than the shift speed of the intake valve 14, it is possible to suppress a decrease in an overlap amount OL2 between a graph e5 during shift of the exhaust valve 15 and a graph i5 during shift of the intake valve 14.

In this embodiment, an electric VVT mechanism is used as the intake VVT 90. As described above, since the operating speed of an electric VVT mechanism is generally higher than that of a hydraulic VVT mechanism, a shift of the hydraulic exhaust VVT 33 may be started earlier than the VVT 90 in a transition period during shift.

In both cases of FIGS. 10 and 11, pumping losses in transition periods in operations of the VVTs 33 and 90 can be reduced, and thus, fuel efficiency can be increased.

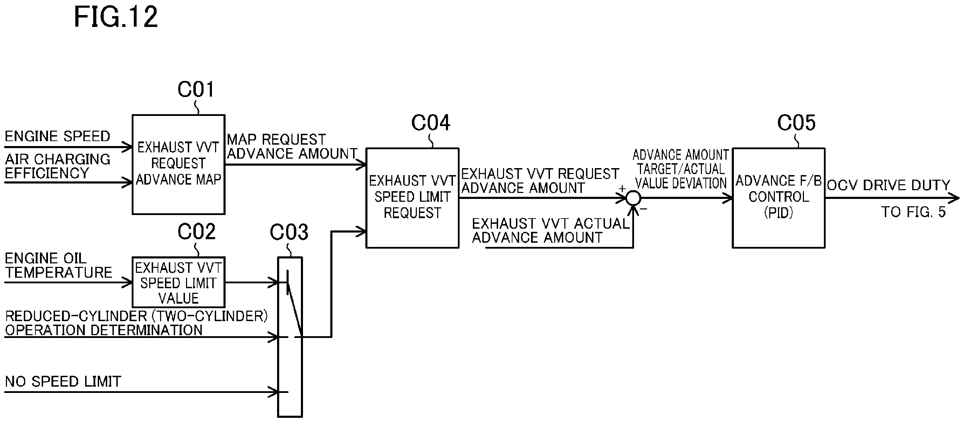

FIG. 12 is a control block diagram showing a method for controlling a VVT operating speed according to this embodiment. A target of control of a VVT operating speed according to this embodiment, that is, a target of limitation of a VVT operating speed, is the exhaust VVT 33.

As shown in FIG. 12, in an exhaust VVT request advance map block C01, a map request advance amount corresponding to the VVT 33 is acquired from an input engine speed and an input air charging efficiency. The acquired map request advance amount is input to an exhaust VVT speed limit request block C04.

On the other hand, in an exhaust VVT speed limit value block C02, predetermined speed limit values in the VVTs 33 for a reduced-cylinder operation and an all-cylinder operation are acquired from an input engine oil temperature. The acquired speed limit values are input to the exhaust VVT speed limit request block C04 through a switch block C03. The switch block C03 receives, as inputs, the speed limit values of the exhaust VVTs, and either a "determination value" on whether a reduced-cylinder (two-cylinder) operation or not or a "no speed limit" is input, and these values are input to the speed limit request block C04.

The exhaust VVT speed limit request block C04 outputs an exhaust VVT request advance amount corresponding to a speed limit value for one of a reduced-cylinder operation or an all-cylinder operation. Thereafter, a difference between the output exhaust VVT request advance amount and a current exhaust VVT actual advance amount is calculated, and from the difference, a deviation between a request value (target value) of an advance amount and an actual advance amount (= advance amount target/actual value deviation) is calculated, and is input to an advance F/B control block C05 together with a speed limit request value.

In the advance F/B control block C05, an OCV drive duty is derived from the input advance amount target/actual value deviation by, for example, a proportional-integral-differential (PID) method. The derived OCV drive duty is input to the oil control valve (OCV) 110 illustrated in FIG. 5, and the oil control valve 110 is driven.

### First Control Method

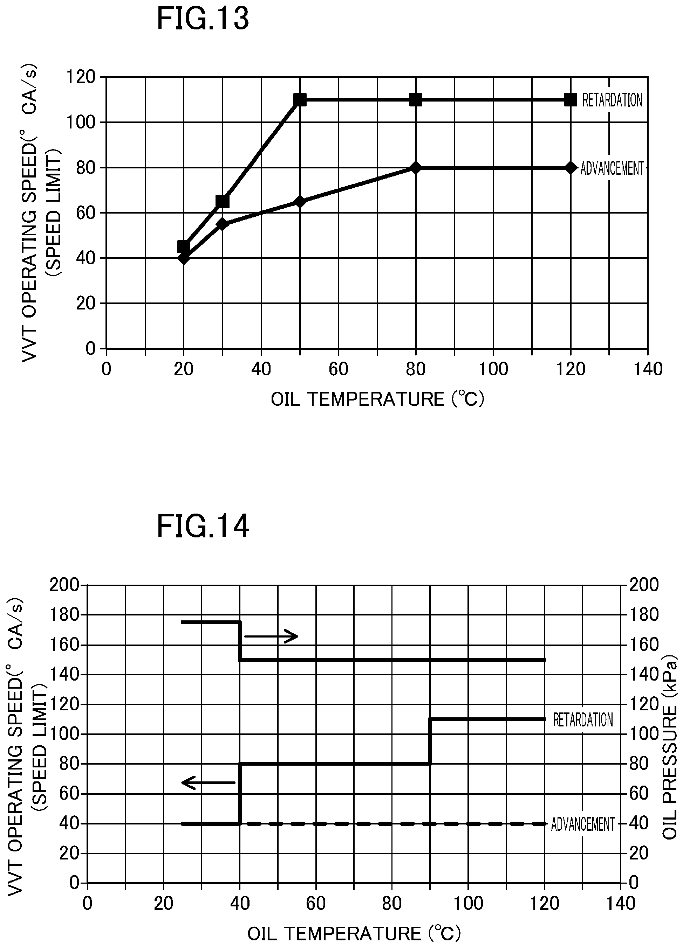

FIG. 13 shows a relationship between a speed limit and an oil temperature in an exhaust VVT operating speed according to this embodiment. This graph shows an operating speed of the VVT 33 in the retarding direction (represented by squares) and an operating speed of the VVT 33 in the advancing direction (represented by diamonds) in a case where an oil pressure of lubricating oil in the engine 2 is fixed at 175 kPa under reduced-cylinder operation conditions.

As shown in FIG. 13, at an oil temperature of 20°C, the VVT operating speed is 40°CA/s in the retarding direction, and is 45°CA/s in the advancing direction (where CA represents a crank angle, the same hereinafter). At an oil temperature of 30°C, the VVT operating speed is 65°CA/s in the retarding direction, and is 55°CA/s in the advancing direction. At an oil temperature of 50°C, the VVT operating speed is 110°CA/s in the retarding direction, and is 65°CA/s in the advancing direction. At oil temperatures of 80°C and 120°C, the VVT operating speed is 110°CA/s in the retarding direction, and is 80°CA/s in the advancing direction.

As described above, the operating speed in the retarding direction is higher than the operating speed in the advancing direction. This corresponds to a relationship in which the operating speed in the advancing direction is low in FIG. 10 and the operating speed in the retarding direction is high in FIG. 11. To increase the operating speed of the VVT 33, the oil supply amount from the oil control valve 110 per a unit time is increased.

As already known in the art, as the temperature decreases, a kinematic viscosity of lubricating oil increases. Accordingly, as the temperature of lubricating oil decreases, the oil pressure in a VVT operation decreases more greatly, that is, the degree of decrease of the oil pressure increases. At this time, the oil pressure including a margin is set at 175 kPa such that the reduced oil pressure is not below 105 kPa (= second predetermined oil pressure), which is an oil pressure necessary for maintaining a reduced-cylinder operation. In addition, since the oil jet 28 operates at 200 kPa (= first predetermined oil pressure), 175 kPa is also selected as an oil pressure at which the oil jet 28 does not operate during the reduced-cylinder operation.

### Second Control Method

FIG. 14 shows a relationship between a speed limit, an oil pressure, and an oil temperature in an exhaust VVT operating speed according to this embodiment. This graph shows an operating speed of the VVT 33 in the retarding direction (solid line) and an operating speed of the VVT 33 in the advancing direction (broken line) in a case where the oil pressure of lubricating oil of the engine 2 is reduced at an oil temperature of 40°C or more under reduced-cylinder operation conditions. The left ordinate represents the VVT operating speed, and the right ordinate represents the oil pressure.

As shown in FIG. 14, in the second control method, the oil pressure set at a temperature less than 40°C is reduced from 175 kPa to 150 kPa at the time when the oil temperature reaches 40°C. At the same time, at the time when the oil temperature reaches 40°C, the VVT operating speed in the retarding direction is increased from 40°CA/s to 80°CA/s. In addition, at the time when the oil temperature reaches 90°C, the VVT operating speed in the retarding direction is increased from 80°CA/s to 110°CA/s. On the other hand, the VVT operating speed in the advancing direction is constant at 40°CA/s, independently of the oil temperature. In the second control method, the relationship in which the operating speed in the retarding direction is higher than the operating speed in the advancing direction corresponds to the relationship in which the operating speed in the advancing direction is low in FIG. 10 and the operating speed in the retarding direction is high in FIG. 11.

As described above, in this embodiment, as a configuration of hydraulic operation chambers of the exhaust VVT 33, the number of retard chambers 208 is three, whereas the number of advance chambers 207 is four. Accordingly, the oil consumption per a unit phase change amount (°CA/s) in the VVT 33 is smaller in the retardation side than in the advance side. Thus, as shown in FIG. 14, at oil temperatures of 40°C or more, for example, the operating speed of the VVT 33 in the retarding direction is set higher than the operating speed in the advancing direction because of small oil consumption amount and a small degree of decrease in the oil pressure.

Moreover, as the oil temperature increases (e.g., 90°C), the kinematic viscosity thereof decreases, and the amount of decrease in the oil pressure in operation of the VVT 33 decreases. Thus, the operating speed can be increased from 80°CA/s to 110°CA/s, for example.

In addition, as shown in FIG. 14, at the time when the oil temperature reaches 40°C, the oil pressure is reduced from 175 kPa to 150 kPa. In this manner, by reducing the oil pressure generated by a torque generated in the engine 2, fuel efficiency can be enhanced. The oil pressure of 150 kPa is an oil pressure that does not decrease below 105 kPa, which is an oil pressure necessary for maintaining a reduced-cylinder operation, even with a decrease in the oil pressure in a VVT operation. The oil pressure of 150 kPa is also a lowest oil pressure necessary for maintaining lubrication of the engine 2, that is, necessary for maintaining an operation of the engine 2.

In this embodiment, with an increase in the oil temperature, the discharge oil pressure from the oil pump 36 is reduced. In other words, as the oil temperature decreases and the kinematic viscosity of oil increases, the discharge oil pressure is increased. In this manner, in an operation of the VVT 33, the oil pressure does not decrease below an oil pressure necessary for maintaining a reduced-cylinder operation, independently of the oil temperature. In addition, a load on the oil pump 36 that operates by a torque generated by the engine 2 decreases, and thus, fuel efficiency can be enhanced.

Although the temperature at which the VVT operating speed in the retarding direction is increased from 40°CA/s to 80°CA/s is 40°C in the above example, this temperature at the change only needs to be in the range from 30°C to 50°C. Although the temperature at which the VVT operating speed is increased from 80°CA/s to 110°CA/s is 90°C in the above example, this temperature only needs to be in the range from 80°C to 100°C.

In the second control method, the VVT operating speed in the retarding direction is increased stepwise. Alternatively, this operating speed may be changed linearly. For example, the VVT operating speed in the retarding direction may be 40°CA/s at 25°C, and be 110°CA/s at 120°C so that these two points are connected by a straight line.

Similarly, the oil pressure may be 175 kPa at 25°C and be 150 kPa at 120°C so that these two points are connected by a straight line.

### -Advantages-

As shown in FIGS. 10 and 11, in the hydraulic exhaust VVT 33, supply of the oil pressure to the VVT 33 is controlled to be performed at high speed in a direction in which the overlap amount between open periods of the intake valve and the exhaust valve increases and at low speed in a direction in which the overlap amount decreases. Thus, pumping losses in transition periods in operations of the VVTs 33 and 90 can be reduced, and thus, fuel efficiency can be enhanced.

### Other Embodiment

Although the VVT mechanism subjected to speed limit is the hydraulic exhaust VVT 33 in this embodiment, the present invention is not limited to this example. For example, in a case where the electric intake VVT 90 is replaced by a hydraulic VVT 90, a VVT subjected to speed limit may be one or both of the VVT 33 and the VVT 90.

### INDUSTRIAL APPLICABILITY

An engine control device according to the present invention is useful as a control device of an engine including a hydraulic variable valve timing mechanism and a hydraulic valve stop mechanism that performs a reduced-cylinder operation of the engine by suspending an operation of some of cylinders of the engine by supplying an oil pressure.

### DESCRIPTION OF REFERENCE CHARACTERS

- 1: oil supply device
- 2: engine
- 3: head cover
- 8: piston
- 9: crank shaft
- 14: intake valve
- 15: exhaust valve
- 18: intake-side cam shaft
- 19: exhaust-side cam shaft
- 25: valve stop mechanism-equipped oil pressure lash adjuster
- 25a: pivot mechanism
- 25b: valve stop mechanism
- 28: oil jet
- 33: hydraulic exhaust variable valve timing mechanism
- 35: exhaust-side first direction switching valve
- 36: variable displacement oil pump
- 90: electric intake variable valve timing mechanism
- 91: electric motor
- 92: conversion section
- 110: oil control valve (OCV)
- 207: advance chamber
- 208: retard chamber

## Claims

1. An engine control device of an engine including a variable valve timing mechanism that changes an opening timing or a closing timing of at least one of an intake valve or an exhaust valve by hydraulic driving in accordance with an operating region of the engine, and an oil jet that injects oil in a piston direction under a pressure of a first predetermined oil pressure or more, wherein
an upper limit of an oil pressure used by the variable valve timing mechanism is set to be lower than the first predetermined oil pressure, and
supply of an oil pressure to the variable valve timing mechanism is controlled in such a manner that an operating speed of the variable valve timing mechanism is high in a direction in which an overlap amount between open periods of the intake valve and the exhaust valve increases, and is low in a direction in which the overlap amount decreases.

2. The engine control device according to claim 1, wherein
the engine includes a plurality of cylinders,
the engine selectively performs an all-cylinder operation in which all the plurality of cylinders operate and a reduced-cylinder operation in which one or more of the plurality of cylinders are suspended, and
the reduced-cylinder operation is performed by stopping valves of the one or more suspended cylinders under an action of a second predetermined oil pressure lower than the first predetermined oil pressure.

3. The engine control device according to claim 1 or 2, wherein
the variable valve timing mechanism by hydraulic driving is interposed at least in the exhaust valve, and
an amount of oil supply per a unit time in a phase change in a retarding direction in the exhaust valve is increased.

4. The engine control device according to any one of claims 1 to 3, wherein
in a case where an oil temperature is lower than a predetermined oil temperature, an oil pressure is set at a relatively high pressure in a range lower than the first predetermined oil pressure, and
in a case where the oil temperature reaches the predetermined oil temperature, the oil pressure is set at a relatively low pressure in a range greater than or equal to an oil pressure necessary for maintaining an operation of the engine.

5. The engine control device according to any one of claims 1 to 4, wherein
the variable valve timing mechanism by hydraulic driving is interposed at least in the exhaust valve, and
an oil consumption amount per a unit phase change amount in phase change is smaller in a retardation side than in an advance side in such a manner that an operating speed in phase change in a retarding direction in the exhaust valve is higher than an operating speed in phase change in an advancing direction in the exhaust valve.
